# EUROPEAN PATENT APPLICATION

(11) **EP 1 217 762 A2**
(43) Date of publication of application: **26.06.2002**
(21) Application number: 01310012.8
(22) Date of filing: 29.11.2001
(51) Int. Cl.: H04B 7/185, H04M 15/00

(54) **A resource management and billing system for a broadband satellite communications system**

(30) Priority: 20.12.2000 US 741120
(71) Applicant: Hughes Electronics Corporation, El Segundo, California 90245 (US)
(72) Inventor: Neti, Murty, Germantown, Maryland 20876 (US); Gopal, Rajeev, N. Potomac, Maryland 20878 (US)
(74) Representative: Jackson, Richard Eric

(57) **Abstract**

A resource management and billing system in a satellite communications network, which is capable of monitoring and verifying resource usage by terminals in the network. The system employs features of the satellite terminals, payload control computer and satellite demodulators, and a network operations control center. The satellite terminal maintains a record of the number of packets requested from the payload control computer. These packets represent the usage history data of each satellite terminal. In addition, using the payload control computer and a satellite demodulator, the satellite maintains records of the number of packets requested by the satellite terminal. The satellite terminal and the payload control computer send the data to the network operations center which audits the data to determine the accuracy regarding the requested amount of resources, and to verify the accuracy of usage data reported by the satellite terminal.

## Description

### BACKGROUND OF THE INVENTION

### Field of the Invention:

The present invention generally relates to a resource management and billing system and method for a broadband, multimedia, satellite-based communications network system. More particularly, the present invention relates to a resource management and billing system and method for use in a satellite-based communications network, which employs operations of the payload control computer, the satellite terminals, and the network operations control center to collect and monitor usage data for billing as well as detection for fraudulent usage of the broadband service provided by the network.

### Description of the Related Art:

A number of two-way communication systems exist to provide business enterprises and other organizations with local area networking (LAN), batch and interactive transmission service, interactive voice, broadcast data and voice communications, and a number of other services. Presently, billing systems exist for such two-way communication when the communication is connection oriented. For example, internet service providers who provide service via the telephone lines or cable lines have physical connections to determine respective usage by the customers. All of the information is physically routed through the service provider, therefore enabling each service provider to generate usage information for billing purposes for each customer.

As larger numbers of users demand faster service, an increasing number of service providers are turning to broadband, single satellite hop for VSAT-to-VSAT (very small aperture terminal) data transfers. In this type of system, each individual user has a satellite terminal with which the user can request data packets representing, for example, a web address on the world wide web. The request is fulfilled via a satellite without the request having to go through a network operations control center or some other centralized hub. Hence, this type of data traffic is commonly referred to as connection-less traffic. This type of routing also allows for faster delivery of information meeting the demand of current users.

Presently, a disadvantage to this faster connection-less traffic is the inability to maintain billing records for resource usage due to a lack of connection through a central network center. In addition, under and over reporting of connection-less resources can also occur. For example, if a registered user terminal is able to receive more packets of data than the terminal records, then the user terminal is able to use those excess data packets without payment for such use.

Accordingly, a need exists for a system and method which requires each user to accurately monitor and report the amount of resources being used in a connection-less oriented two-way communication system. In addition, a need exists for a system and method monitoring the number of data packets requested and transmitted to a user terminal, in order to determine if the user terminal is over or under reporting the amount of resources being requested.

### SUMMARY OF THE INVENTION

An object of the present invention is to provide an accurate and reliable resource management and billing system and method for use in a satellite-based communications network.

Another object of the present invention is to provide a resource management and billing system and method for use in a satellite-based communications network which allows for connectionless oriented traffic.

A further object of the present invention is to provide a resource management and billing system and method for use in a satellite-based communications network which is capable of monitoring and verifying resource usage by terminals in the network to allow for accurate and reliable billing.

These and other objects are substantially achieved by providing a resource management system and method, adapted for use with a communications network, which is capable of monitoring resource usage by user terminals in the network to allow for accurate billing of the users of their respective user terminals. The resource management system and method comprises first and second resource request monitors, and a coordination center. The first resource request monitor monitors at least one resource request transmitted by a communications unit, which includes an earth-based terminal, with the resource request including information representing a respective amount of communication resources of the communications network being requested. The first resource request monitor also provides first information representing the amount of resources requested by the resource request. The second resource request monitor monitors an amount of communications resources being provided to the communications unit in response to the resource request, and provides second information representing the amount of the communications resources being requested by the resource request. The coordination center compares the first and second information to determine whether the amount of communications resources provided, as represented by the second information, equals the amount of communications resources requested, as represented by the first information. The coordination center further provides an indicator when first and second values are not equal, and also can prevent the communications unit from transmitting another resource request when the first and second information are not equal. The system and method further employs an access monitor and resource grant monitor for maintaining respective records of the resources requested by the communications unit and granted to the communications unit.

### BRIEF DESCRIPTION OF THE DRAWINGS

These and other objects, advantages and novel features of the invention will be more readily appreciated from the following detailed description when read in conjunction with the accompanying drawings, in which:
Fig. 1 illustrates a satellite-based communications network employing a billing system and method in accordance with an embodiment of the present invention;
Fig. 2 is a block diagram overview of a communications network employing components of the satellite-based communications network shown in Fig. 1;
Fig. 3 illustrates an example of the sequence of events for usage data collection for a billing system and method employed in the satellite-based communications network shown in Fig. 1 in accordance with an embodiment of the present invention;
Fig. 4 illustrates an exemplary usage data collection ladder diagram for a billing system and method according to an embodiment of the present invention;
Fig. 5 is a block diagram overview of an example of the interrelationship between components used in the billing system and method according to an embodiment of the present invention;
Fig. 6 illustrates an exemplary new account establishment ladder diagram illustrating exemplary steps for establishing a new account as performed by a billing system and method according to an embodiment of the present invention;
Fig. 7 illustrates an exemplary account ladder diagram illustrating steps performed in relation to a satellite terminal by the billing system and method according to an embodiment of the present invention;
Fig. 8 is a flow chart illustrating exemplary steps for creating a rate plan as performed by the billing system and method according to an embodiment of the present invention; and
Fig. 9 is a flow chart illustrating exemplary steps for creating a wholesale bill as performed by the billing system and method according to an embodiment of the present invention.

### DETAILED DESCRIPTION OF THE PREFERRED EMBODIMENTS

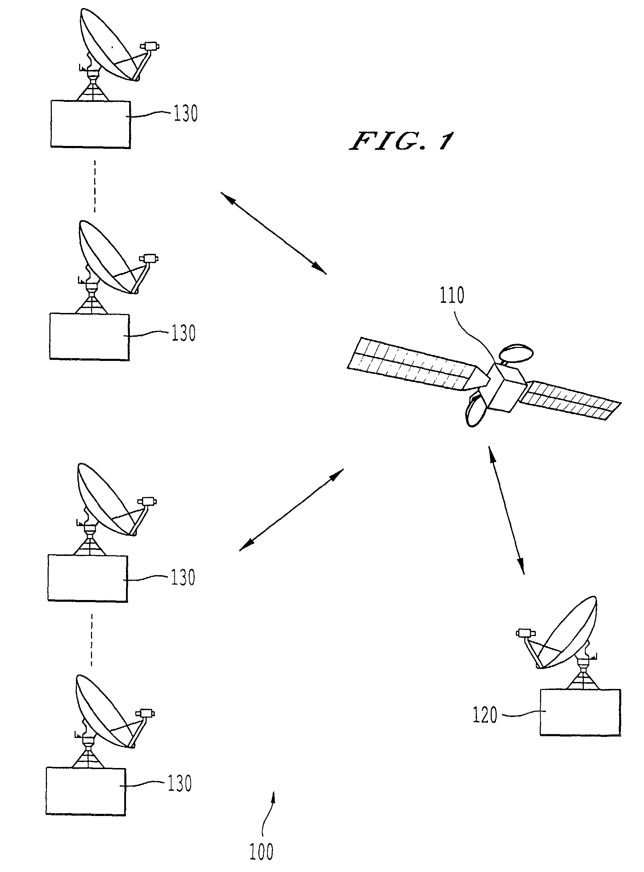

Fig. 1 shows an overview of a two-way satellite communications network 100 comprising at least one satellite 110, such as a geosynchronous earth orbit (GEO), medium earth orbit (MEO) or low earth orbit (LEO), a satellite network operations control center (NOCC) 120, and various satellite terminals 130 configured for different users. As discussed in more detail below, to enable billing for the resources used, the satellite terminal 130, for example, records its usage data for connection-less traffic and sends this data periodically to the NOCC 120, which stores and monitors data relating to connection oriented and connection-less oriented usage. The data collected at the NOCC 20 undergoes a mediation process that converts usage data into transaction records that are the basis for billing. The usage data reported by satellite terminals 130 is also audited to ensure detection of under/over reporting of data received by the satellite terminals 130. In addition, usage data provided from the satellite 110 is used in auditing the usage data reported by the satellite terminals 130.

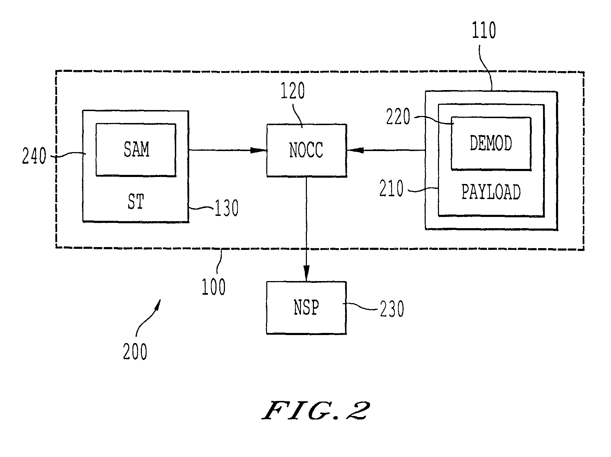

Referring now to Fig. 2, a block diagram illustrating an example of an overall communications network 200 employing the network 100 shown in Fig. 1. As illustrated, the network 200 employs at least one satellite 110, the NOCC 120, and at least one satellite terminal 130. As further shown, the satellite 110 comprises multiple demodulators in the payload. There is at least one demodulator 220 assigned to each uplink cell. The demodulator(s) 220 assigned to an uplink cell is (are) responsible for receiving data transmitted by all terminals in that uplink cell. The overall communications network 200 interacts with a network service provider 230 to provide data from the network service provider to the terminals 130 via the network 100. The overall communications network 200 can also send information, such as billing information, to the network service provider 230. As further illustrated, each satellite terminal 130 includes a security access module 240 (SAM), the purposes of which is described in more detail below.

The manner in which the network 100 collects usage data will now be briefly described. Usage data can be collected by the NOCC 120 from the payload 210 and satellite terminals 130 using either command response mechanisms or an unsolicited periodic reporting mechanism. It is preferable to use the unsolicited periodic reporting mechanism in an embodiment of the present invention due to the large number of satellite terminals 130 in the network 100. This technique also avoids the need for the use of communications resources to send polling information to the terminals 130 from the NOCC 120.

The satellite terminals 130 can be configured to transmit their usage data so that the usage data traffic arriving at the NOCC 120 is uniformly distributed over time. There is a possibility that the NOCC 120 may not receive billing data from the satellite terminals 130 due to packets being dropped by the payload 230. Therefore, the satellite terminals 130 should keep reporting the usage data until an acknowledgement is received from the NOCC 120. Also, some satellite terminals 130 may fail to report usage history data to the NOCC 120, either intentionally or unintentionally. If the NOCC 120 determines that this has occurred and those satellite terminals 130 can be identified while their usage history data is still available, the NOCC 120 can send a command to these satellite terminals 130 to retrieve the usage history data.

In this example, the satellite terminals 130 are configured to report usage history data to the NOCC 120, typically once every 24 hours. The satellite terminals 130 will also be configured with the time of day during which the satellite terminals 130 report the data back to the NOCC 120. This time is typically during a non-peak usage hour. The satellite terminals 130 determine the exact time of day when they report usage data to the NOCC 120 by executing a random time generator function and report at that time. Independent of the reporting periodicity, the satellite terminals 130 collect and store the usage history data in nonvolatile memory, such as an EEPROM, so that usage data is kept between power resets. Each such record includes time stamps containing the actual time of recording and also the time of collection.

The satellite terminals 130 collect and store the usage history data on the hour, except when the satellite terminal 130 is powered down, and during the first hour after power up, for example, when storage occurs within a time period less than one hour. However, the reporting period is configurable and typically will not be longer than 24 hours but can be any length of time. To conserve system bandwidth, it is desirable to have the satellite terminal 130 aggregate data before reporting. The satellite terminal 130 should have capability of aggregating the usage records for the reporting period. Therefore the satellite terminals 130 are configured to report one record for each of the collection periods or report one aggregated record. High volume satellite terminals normally are involved in a large number of transactions and their reporting periods are identical to the collection period. This eliminates the need for aggregation at these satellite terminals 130.
Low volume satellite terminals are not expected to send data to more than 10 destinations. Aggregation in low volume satellite terminals should therefore not be difficult and helps conserve system bandwidth when usage is reported back to the NOCC 120.

It is noted that a satellite terminal 130 reports data to the NOCC 120 for each reporting period, even if the satellite terminal 130 was not involved in any connection-less transactions for this period. The NOCC 120 acknowledges receipt of the usage data by sending an acknowledgement back to the reporting satellite terminal 130. The usage data may span several data packets, therefore the NOCC 120 will send an acknowledgement per data packet. If the satellite terminal 130 does not receive an acknowledgement back within a configured time period, it resends this data packet. Typically, an acknowledgement is sent by the NOCC 120 to the satellite terminal 130 after each reporting period. The NOCC 120 also identifies the satellite terminals 130 that have not sent the usage history data and gets this information from them using a command-response mechanism. In addition, the satellite terminals 130 keeps a copy of the last 60 records corresponding to the last 60 collection intervals of usage history data sent to the NOCC 120

The payload control computer 210 of satellite 110 also sends resource allocation (number of packets) and actual usage history data in an unsolicited manner to the NOCC 120 periodically, for example, every four hours. Typically, the payload control computer 210 sends usage information relating to the individual terminals, and the demod 220 sends information relating to the aggregate packet transmission for all terminals in the uplink cells. The information that the payload 210 and demod 220 send to the NOCC 120 comprises, for example, resource assignment for individual terminals and actual aggregate transmission, per uplink cell, for various types of transmissions such as multicast, unicast, and broadcast.

Demod 220 maintains records of slots successfully demodulated. This data is reported to the NOCC 120 once every configurable period, which is typically four hours but can be any suitable length of time. This four hour period is the maximum rate that the telemetry channel can accommodate (assuming 10% usage of telemetry bandwidth). If requested by the NOCC 120, the payload 210 can respond with details for each of the satellite terminals 130. Once the reporting period of the satellite terminals 130 is configured within certain limits it is not expected to be modified within the normal course of operation. It is also noted that the demod 220 of the satellite 110 does not keep count of the individual satellite terminals 130. For example, the demod 220 comprises one mask/match counter, that is used to count a subset of the demod's routed packets with matching value for the mask subset of the source satellite terminal 130 identification and satellite routing field bits.

In addition, the demod 220 also keeps running counts of slots successfully demodulated by service type. The demod 220 will keep the total packet count, payload destination packet count, unicast packet count, contention packet count, broadcast packet count, multicast replication packet count, and no packet count. Typically, the demod 220 does not keep count by specific individual satellite terminals 130. The demod 220 configures with two mask/match counters (parameters), which are used to count subsets of the demod 220 routed packets with matching values for the mask subset of the source ID and satellite routing field bits. The mask/match counter will be commanded by the NOCC and loaded by the payload control computer 230 into each of the uplink cells. The demod 220 analyzes each uplink cells demodulation to search out counts from suspected under reporting satellite terminals 130.

It is further noted that each satellite terminal 130 keeps track of all packets and the slots in which they are transmitted. For authenticating the packets individually, a terminal also generates an ACF (Access Control Field). The ACF is a 32-bit field that is present in every uplink Code Block transmitted by a satellite terminal 130. This field enables the satellite payload control computer 210 to verify that the burst was sent by a registered satellite terminal 130, and whether the sending satellite terminal 130 is authorized to be sending a burst to this particular channel and slot. The slot count is computed by service type, destination, time of day and priority, if applicable. It keeps track of authorization levels permitted by the NOCC 120 during login and subsequent requests to the NOCC 120 for upgrades of service, bumping up or down of volume limits, changes in priority levels, congestion control policy and changes, requests formulated to send to the payload control computer, and capacity assignment sent by the payload control computer 210.

As can be appreciated from the above, each satellite terminal 130 collects usage data pertaining to its own usage and sends this information to the NOCC 120. In addition, allocation and usage data is collected by the payload control computer 210 and the demod 220, and this data is sent to the NOCC 120 to validate the data provided by the satellite terminals 130. All the allocation and usage data collected at the NOCC 120 goes through a mediation process that converts the verified usage data from the satellite terminals 130 into transaction billing records that are then sent to the NSP 230, which can thus generate the bills to be provided to the users of the terminals 130. Alternatively, once the NOCC 120 has collected all the usage data from the terminals 130, the NOCC 120 can send the total allocation and usage data to the network service provider 230, which can thus generate the bills to be provided to the users of the terminals 130.

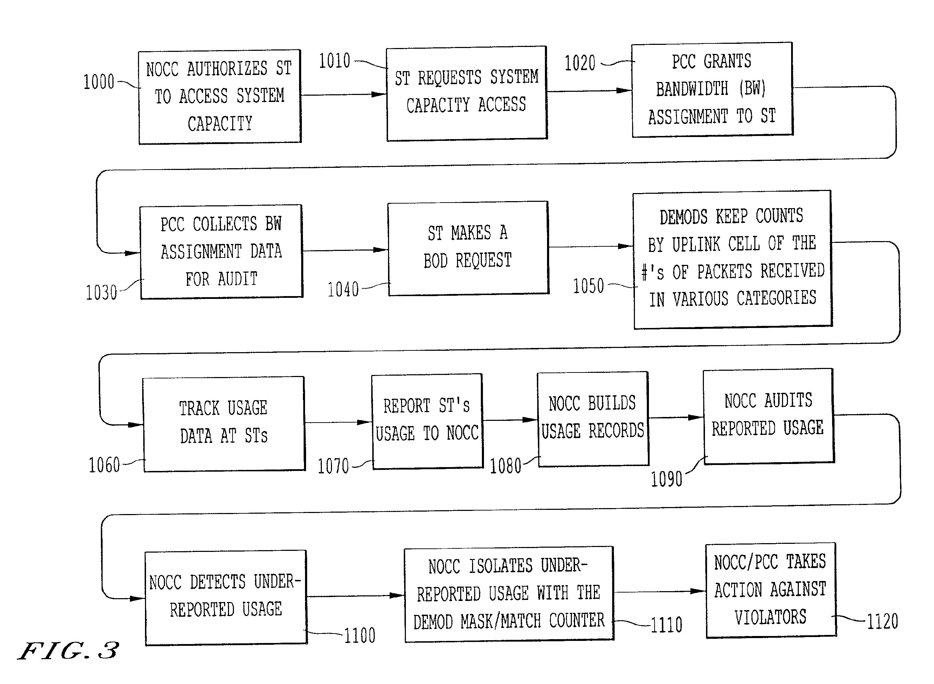

Fig. 3 is a flowchart illustrating an example of steps performed by a satellite terminal 130 in gaining bandwidth assignment and sending billing information to the NOCC 120. Before a user gains access to the system, the NOCC 120 must authorize the satellite terminal 130 to access the network 250, as shown in step 1000. The satellite terminal 130 then requests a bandwidth assignment in step 1010. Next, the satellite's payload control computer 210 grants the bandwidth assignment to the satellite terminal 130, as shown in step 1020. In step 1030, the payloa control computer 210 maintains a record, for audit purposes, of the bandwidth assignment.

As the satellite terminal 130 requires more system capacity, it makes a bandwidth on demand request, as shown in step 1040. In step 1050, a demod 220 within the satellite 110 keeps track of the number of packet requests the payload control computer 210 has received from the individual satellite terminals 130 in that particular uplink cell. As indicated in step 1060, the satellite terminal 130 maintains a record of its own requests. Then, the satellite terminal sends the usage record to the NOCC 120, as indicated in step 1070. In step 1080, the NOCC 120 builds a compilation of usage records from the satellite terminal 130 as well as from the payload control computer 210 and demod 220 on the satellite 110. Next, as shown in steps 1090 and 1100, the NOCC 120 audits the usage data and detects any under reporting by the satellite terminals 130. Step 1110 shows the NOCC 120 isolating the violating satellite terminal through the mask/match counter, as explained below, and in step 1120, the NOCC 120 reports the violator to the corresponding NSP 230.

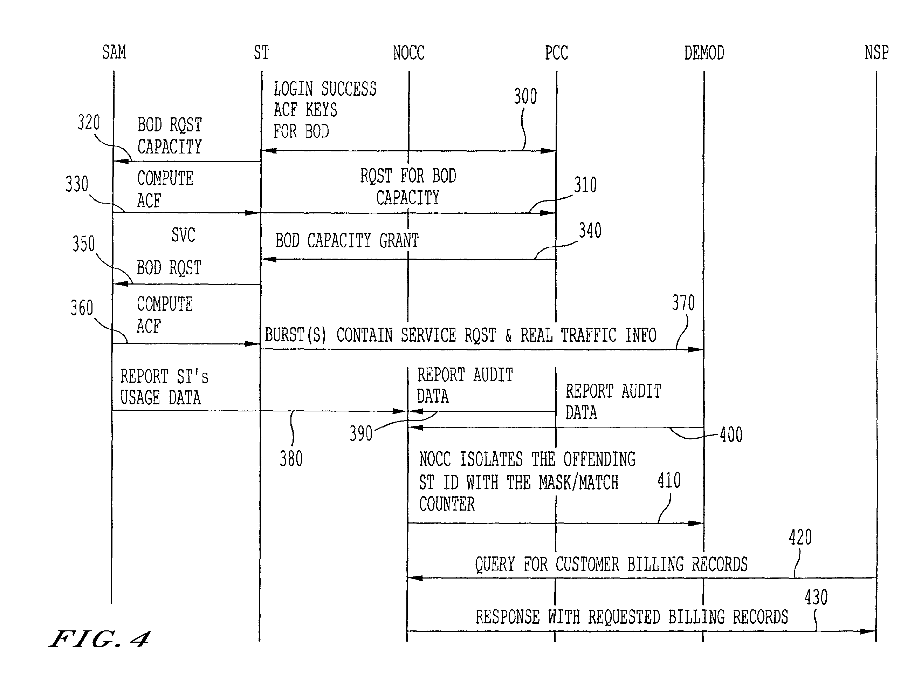

The operations of a satellite terminal 130, NOCC 120, payload 210 and demod 220 for monitoring usage by the satellite terminal 130 will now be described in more detail with reference to Figs. 4-9. As described briefly above, each satellite terminal 130 comprises a security access module (SAM) 240, which generates cryptographic information enabling communication between the NOCC 120, and the satellite terminal 130. As shown in Fig. 4, a satellite terminal 130 makes a login request to the payload control computer (PCC) 220 of satellite 110, and the PCC sends a confirmation 300 to the satellite terminal 130. When a satellite terminal 130 makes a bandwidth on demand capacity request 310 to the satellite 110, the satellite terminal 130 also makes this request 320 to its SAM 240. The SAM 240 utilizes key material securely supplied by the NOCC 120 to cryptographically create and provide an ACF (access control field) 330 to its satellite terminal 130 for each pair of packets transmitted by its satellite terminal 130. Also, if the satellite terminal 130 is an authorized user, the PCC 220 grants the bandwidth on demand capacity request 340. The payload control computer 220 maintains counts of assigned uplink packets and volume requests by satellite terminal 130 for audit purposes.

When a satellite terminal 130 makes a bandwidth on demand service request, the satellite terminal 130 sends this request 350 to its SAM 240. The satellite terminal SAM 240 utilizes key material securely supplied by the NOCC 120 to cryptographically create the ACF field 360 for each pair of packets transmitted by its satellite terminal 130. The satellite terminal 130 then sends real traffic information 370 to the demod 220.

A satellite terminal 130 transmits usage history data via packets on its assigned slots. The demod 220 keeps track of the total number of packets of a particular category received by the satellite 110 in all terminals 130 in that uplink cell. Meanwhile, the satellite terminal 130 also collects usage history data indicative of its own usage including the total number of packets of the same category transmitted by satellite terminal 130 in the uplink cell in the same period of time. The SAM 240 counts packets of various categories, such as, broadcast, multicast, high priority, low priority, and reports the usage data 380 for the satellite terminal 130 to the NOCC 120. The SAM 210 will send hourly or daily usage records in such a way that the NOCC 120 can detect tampered or deleted usage records. The SAM 240 will output usage records to the satellite terminal 130, which relays this data to the NOCC 120. The satellite terminal's software keeps the accumulation of usage data and stores it in nonvolatile memory such as EEPROM, within the satellite terminal 130. In addition, the NOCC 120 can also poll the satellite terminal 130 to send usage data information for the satellite terminal 130 periodically, for example, every hour at non-peak times.

As further shown in Fig. 4, the PCC 210 and demod 220 transmit audit data 390 and 400, respectively, to the NOCC 120. This audit data is representative of the usage requested by satellite terminal 130, and should correspond with the usage data 380 sent to the NOCC 120 by the satellite terminal 130. The NOCC 120 guides the collection of the usage data counts so that the start and end time of a collection period is nearly the same at the satellite 110 and for the satellite terminals 130 in an uplink cell. Preferably, the collection will take place on an hourly basis.

The NOCC 120 creates a usage data record for each satellite terminal 130 based on the usage that is reported from each individual satellite terminal 130. Then, the NOCC 120 periodically performs the audits to detect any existence of a compromised security access module (SAM) which is under reporting usage within an uplink cell, by comparing the two reports on the total number of packets of a particular category received from the PCC and demod 220 of the satellite 110 and from the satellite terminal 130, respectively.

The NOCC 120 will provide violation information 410 to the demod 220 when the NOCC 120 detects a mismatch between the usage data 380 provided by the satellite terminal 130 and the usage data 390 and 400 provided by the PCC 210 and demod 220, respectively. The NOCC 120 will then attempt to perform another audit which will isolate to the exact satellite terminal 130 under reporting usage using the demod 220 mask/match counter. If the usage data remains inconsistent, the NOCC 120 can take action against a violating satellite terminal 130 by either shutting it down, or by not distributing the uplink cells ACF key updates to the offending satellite terminal 130. Therefore, the satellite terminal 130 will no longer be able to communicate with the PCC 210.

As further shown in Fig. 4, the network service providers 230 will query the NOCC 120 for a particular customers billing information via an electronic database query 420. The NOCC 120 responds to the network service provider query with the requested billing records 430. In this exemplary arrangement, the network service providers 230 are charged by the network 200 based on contract rates between a wholesaler and the network service provider 230, as well as the actual traffic usage for each different category of broadband service. Network service providers 230 will be charged for network management functions that the NSP's 230 perform over the network 100. The wholesaler and network service provider billing cycle is configurable on an as needed basis, potentially different for each NSP 230.

Another function available to the wholesaler allows it to maintain an audit trail in the NOCC 120 for use in auditing invoices to NSP's 230. The wholesaler can keep, for example, six months worth of invoices and one months worth of raw usage data in the NOCC 120 online and available to an NSP 230, and can provide sufficient usage accounting to allow the NSP's 230 to perform the customer billing functions. Information required by the NSP's 230 to support their customer billing responsibilities can be made available to the NSP's 230 by the wholesaler at least once per day on a demand basis via an electronic database query. The wholesaler keeps this information in a secure location for a period of, for example, up to one year from the date of generation of the invoice. Customer billing by NSP's will be based upon different factors for each service category such as customer information rate and period of subscription time, and connection time, as well as, usage in kilobytes for the best effort services.

The communications network 200 in this example bills its customers for two types of system use, namely, network bandwidth and network management services. Additionally, the network 200 provides usage data to network service providers who may use the data in support of their billing. The billing system using the usage data verification features discussed above supports the establishment of a wide variety of rate plans. Thus, the business group, such as marketing, has flexibility in packaging new services. These types of billing systems contain information about customers, customer interactions with the network 200 and revenue.

Billing systems of these types also document revenue generated as a result of the business relationship between wholesalers and retailers. An interface to the wholesalers corporate facilities allows for analysis of accounting and financial reporting. Information stored in the billing system is also used to understand how customers use the system. Information is extrapolated from usage history data including usage patterns, peak busy hour by customer and location, and favorite services. Customer retention programs are devised based on usage, and new product offerings are created as usage patterns are detected. Furthermore, the billing system contains a repository of usage data used as a basis for billing. Additionally, the billing system 100 interfaces to other functions as necessary to support a growing business, for example marketing, the financial dept, and product development.

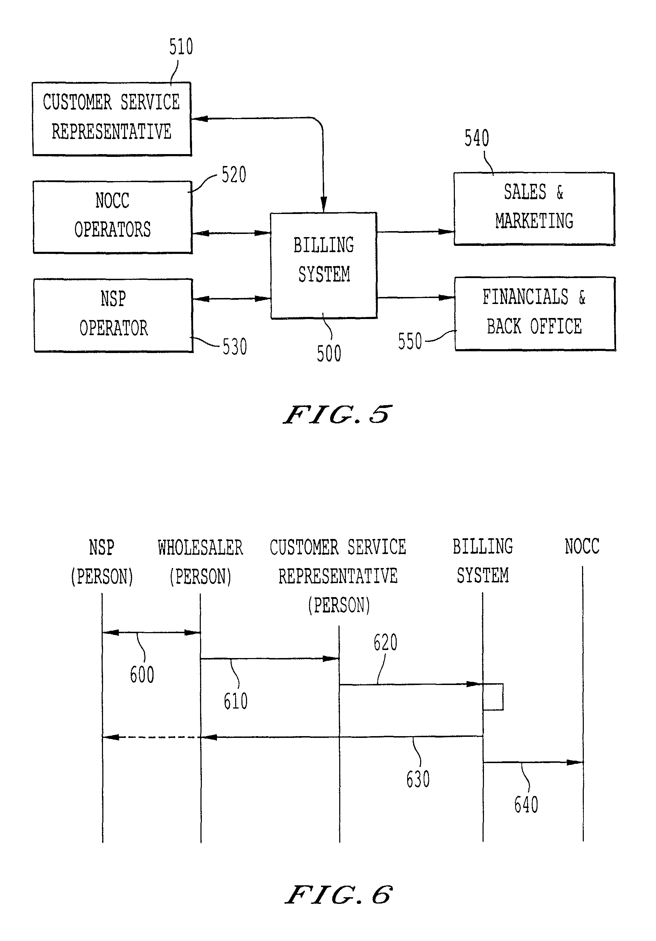

Fig. 5 illustrates an example of these various interfaces such as the processing functions that occur in the billing system 500, which can be controlled by or operated in cooperation with the NOCC 120. For example, the NOCC customer service representative 510 interacts with the billing system 500 to perform several tasks, such as answering questions relating to a bill, updating account information, and depending upon their permission level, issuing credits as directed by the wholesaler. The NOCC operators 520 access billing data during troubleshooting activities or in support of network management tasks.
In addition, a network service provider operator 530 can access the billing system to retrieve billing information or to assist in troubleshooting activities, for example, to correct a poor or non-existent connection. The sales and marketing staff 540 will access the billing system 500 for a variety of functions, such as to determine which services are used and how that can be leveraged with further services. An interface 550 to the wholesaler's corporate financial systems may include a general ledger and account payable/receivable functions.

It is also noted that in the satellite communication system 200, an account is associated with its corresponding network service provider 230, also known as a retailer. Accounts are a billing system representation of a customer. Retailers will have multiple satellite terminals 130. All the satellite terminals 130 associated with an NSP 230 are captured within the NSP's account in the billing system. This allows the billing system to perform the appropriate calculations for usage as specified by the NSP's rate plan for each individual satellite terminal 130, or groups of satellite terminals, depending on the rate plan.

Fig. 6 illustrates an example of the typical steps for establishing a new account within the satellite communication system 200. The first step involves the network service provider becoming a broadband reseller, which involves the exchange 600 of relevant account information between the NSP and the wholesaler. The wholesaler gives account information 610 to the customer service representative. The wholesaler or the customer service representative adds the account information 620 into the billing system, which involves adding the network service provider's account information such as their name, address, phone number, the allowed service, any rate plans and other information corresponding to the billing process. Then the billing system saves the account information and generates an account number. Finally, the billing system provides notification 630 of the account number to the wholesaler and possibly the network service provider. The new account information 640 is also provided to the NOCC 120.

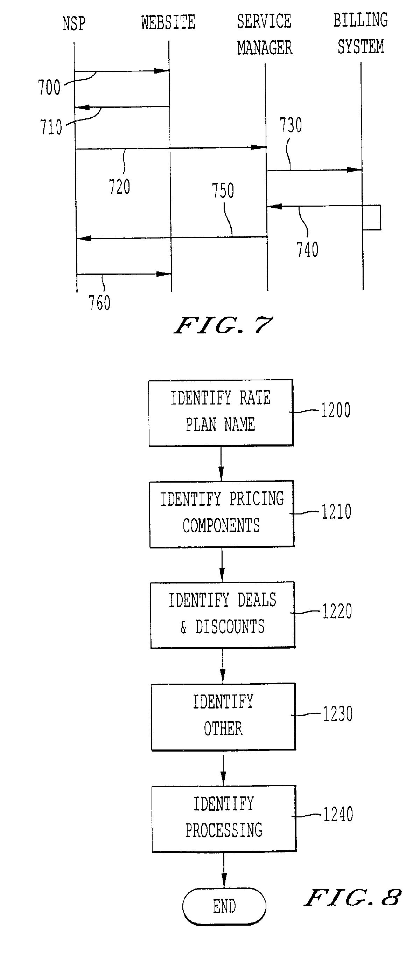

Fig. 7, shows an example of how an account is associated with a particular satellite terminal 130. Initially, an NSP enters login identification information 700 at, for example, a web site. The web site then provides confirmation 710 of the allowable access to the NSP. The NSP configures the satellite terminal via screens provided by service manager, and provides configuration information 720 to the service manager. The service manager provides a verification request 730 to the billing system to verify the account and allowable services with account information in the billing system. The billing system verifies allowable services, as well as the satellite terminals added to the database in the NOCC billing system, and provides a verification 740 to the service manager The service management provides configuration acknowledgement 750 to the NSP. The NSP can then enter a logoff request 760 at the web site, thus enabling the NSP to log off the network 200.

In addition to the above features, the billing system and method according to an embodiment of the present invention also provide for various rate plans for users. Rate plans are product offerings where services are combined in a variety of ways resulting in a customer obtaining a possible discount for purchasing two or more products together. Therefore, Rate plans identify the types of adjustments, either up or down, to apply to a bill. The billing system uses rates associated with these services to calculate charges for system use. This includes recurring, nonrecurring, usage based, time based or other types of entries. Generally, a service or set of services are associated with the rate plan and a rate plan is associated with an account. At the end of bill generation, the billing system applies these charges to each transaction record to produce a bill, reflecting the rate plan.

The interface established between the service manager and the billing system allows for satellite configuration and activation, as well as communication and synchronization of satellite terminal information between service management and billing. This is desirable because rate plans are typically based on the definition of services an NSP has purchased for the satellite terminal. In addition, service level agreements document the quality of services purchased by the NSP. Service level agreements usually cover a variety of issues, including throughput and availability. Performance to a set criteria defined by the service level agreement is measured and may result in credits to an account. The billing system will compare service level agreement criteria against actual performance so that appropriate adjustments can be made. Credits and other processing relating to performance against a service level agreement are documented as part of a rate plan within a billing system.

Each service level agreement may be based on a unique set of criteria depending on the deal negotiated between the wholesaler and the NSP. In general, the wholesale billing system will be customizable to support comparing service level agreement performance against actual performance. This flexibility allows the wholesale billing system to accommodate different types of service level agreements made by the wholesaler.

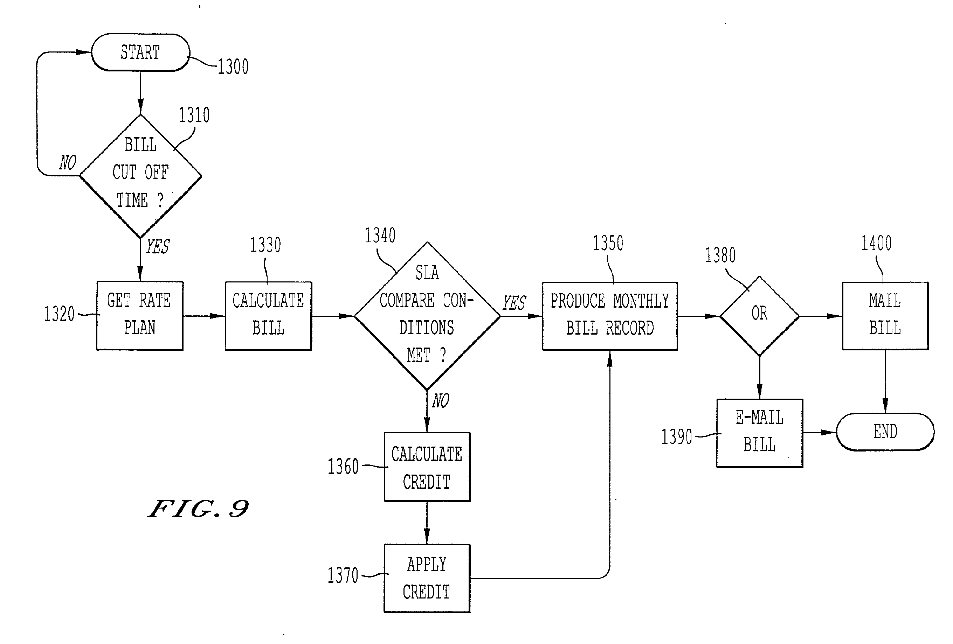

Fig. 8 illustrates an example of steps performed by the billing system and method to create a rate plan within the billing system. These steps assume that rate information is available for marketing. It is important to note that all functions are generally internal to the billing system and all activities within the billing system occurs with authorized staff. Initially, the billing system will identify a rate plan, as indicated in step 1200. Further, the billing system identifies pricing components in step 1210. The billing system will identify any deals or discounts to be credited in step 1220. Furthermore, the billing system identifies any other relevant credits or increased pricing in step 1230, and in step 1240, processes and organizes the information gathered in steps 1200 through 1230.

As also mentioned above, the billing system and method are capable of generating a bill for the NSPs or users. Fig. 9 illustrates an example of the automated steps for creating a wholesale bill. This scenario assumes that the NOCC 120 is functioning properly, accounts associated with satellite terminals 130 are in the billing database, a rate plan has been established and associated with the NSP 240 accounts, usage data and connection records in the billing database are available, and service level agreements support data in the billing database.

In Fig. 9, the billing system initially determines in step 1310 if the bill cutoff time has arrived. If the time has not arrived, the system continues back to the starting step 1300. However, if the bill cutoff time has arrived, the billing system obtains the rate plan in step 1320, and calculates the bill in step 1330. The billing system then compares the bill to the service level agreement in step 1340. Upon comparison, if the service level agreement bill and the calculated bill are the same, the billing system produces a monthly bill record in step 1350. However, if the service level agreement and the bill are not the same, the billing system will calculate the credit in step 1360 and apply the credit to the bill in step 1370 prior to producing a monthly bill in step 1350. The system then determines in step 1380 how to deliver the bill, and delivers the bill to the wholesaler via e-mail in step 1390, or via conventional mail in step 1400, or by any other suitable method.

Although only several exemplary embodiments of the present invention have been described in detail above, those skilled in the art will readily appreciate that many modifications are possible in the exemplary embodiments without materially departing from the novel teachings and advantages of this invention. Accordingly, all such modifications are intended to be included within the scope of this invention as defined in the following claims.

## Claims

1. A resource management system, adapted for use with a communications network (100), said resource management system comprising:
a first resource request monitor (240), adapted to monitor at least one resource request transmitted by a communications unit (130) of said network (100), said resource request including information representing a respective amount of communication resources of said communications network being requested, said first resource request monitor (110) being further adapted to provide first information representing said amount of resources requested by said resource request;
a second resource request monitor (110), adapted to monitor an amount of communications resources being provided to said communications unit in response to said resource request, and to provide second information representing said amount of said communications resources being requested by said resource request; and
a coordination center (120), adapted to compare said first and second information to determine whether said amount of communications resources provided, as represented by said second information, equals said amount of communications resources requested, as represented by said first information.

2. A resource management system as claimed in claim 1, wherein:
said coordination center (120) is further adapted to provide an indicator when said first and second values are not equal.

3. A resource management system as claimed in claim 2, wherein said indicator includes a credit or charge on a bill for said resources requested.

4. A resource management system as claimed in claim 1 or claim 2, wherein: said coordination center (120) is further adapted to prevent said communications unit (130) from transmitting another resource request when said first and second information are not equal.

5. A resource management system as claimed in any one of claims 1-4, wherein: said communications unit (130) includes an earth-based terminal.

6. A resource management system as claimed in any one of claims 1-4, further comprising:
an access monitor (230) , adapted to maintain a record of said respective amount of resources requested; and
a resource grant monitor (120), adapted to maintain a record of said second information.

7. A resource management system as claimed in claim 6, wherein said access monitor (230) is included at a network service provider or a wholesaler.

8. A resource management system as claimed in claim 6, wherein resources being requested include billing records.

9. A resource management system as claimed in any one of claims 1-4, wherein said coordination center (120) is further adapted to receive and compare said first and second information after said first resource request monitor (240) has monitored a plurality of said resource requests and after said second resource request monitor (110) has monitored said amount of communications resources being provided in response to said plurality of resource requests.

10. A resource management system as claimed in any one of claims 1-4, wherein said coordination center (120) is further adapted to receive and compare said first and second information at predetermined intervals of time.

11. A method for monitoring use of communication resources in a communications network, comprising:
monitoring at least one resource request transmitted by a communications unit (130) of said network, said resource request including information representing a respective amount of communication resources of said communications network being requested;
providing first information representing said amount of resources requested by said resource request;
monitoring an amount of communications resources being provided to said communications unit in response to said resource request;
providing second information representing said amount of said communications resources being requested by said resource request; and
comparing said first and second information to determine whether said amount of communications resources provided, as represented by said second information, equals said amount of communications resources requested, as represented by said first information.

12. A method as claimed in claim 11, further comprising:
providing an indicator when said first and second values are not equal.

13. A method as claimed in claim 12, wherein said providing step provides said indicator as a credit or charge for said resources requested.

14. A method as claimed in claim 11, further comprising:
preventing said communications unit (130) from transmitting another resource request when said first and second information are not equal.

15. A method as claimed in any one of claims 11-14, further comprising:
transmitting said resource request from said communications unit (130) which includes an earth-based terminal.

16. A method as claimed in any one of claims 11-14, further comprising:
maintaining a record of said respective amount of resources requested; and maintaining a record of said second information.

17. A method as claimed in claim 16, wherein said record maintaining steps each include maintaining said records at a network service provider (230) or a wholesaler.

18. A method as claimed in any one of claims 11-14, further comprising:
maintaining a record of said respective amount of resources requested being representative of billing information.

19. A method as claimed in any one of claims 11-14, further comprising:
receiving and comparing said first and second information after said first resource request monitor (240) has monitored a plurality of said resource requests and after said second resource request monitor (110) has monitored said amount of communications resources being provided in response to said plurality of resource.

20. A method as claimed in any one of claims 11-14, further comprising:
receiving and comparing said first and second information at predetermined intervals of time.
